# EUROPÄISCHE PATENTSCHRIFT

(11) **EP 1 582 776 B1**
(45) Veröffentlichungstag und Bekanntmachung des Hinweises auf die Patenterteilung: **18.11.2009**
(21) Anmeldenummer: 05005103.6
(22) Anmeldetag: 09.03.2005
(51) Int. Cl.: F16H 57/02

(54) **Getriebegehäuse**
Gear case
Carter de transmission

(30) Priorität: 01.04.2004 DE 102004015988
(43) Veröffentlichungstag der Anmeldung: 05.10.2005
(73) Patentinhaber: Pierburg GmbH, 41460 Neuss (DE)
(72) Erfinder: Dismon, Heinrich, 52538 Gangelt (DE); Köster, Andreas, 45149 Essen (DE)
(74) Vertreter: Patentanwälte ter Smitten

(56) Entgegenhaltungen:
- EP-A- 1 327 798
- DE-A1- 10 122 053
- DE-A1- 19 702 685
- JP-A- 2002 291 192
- US-A1- 2003 102 767

## Beschreibung

Die Erfindung betrifft ein Getriebegehäuse für ein mit einem Elektromotor verbindbares Getriebe, wobei es sich bei dem Elektromotor insbesondere um einen Universaistellantrieb handelt, der zusätzlich eine Sensorik aufweisen kann.

Elektromotoren werden als Stellantriebe zusammen mit einem Getriebe, bei dem es sich beispielsweise um ein Planetengetriebe handelt, in Kraftfahrzeugen eingesetzt. Hierbei erfolgt der Einsatz eines derartigen Stellantriebs mit Getriebe beispielsweise zum Betätigen von Drosselklappen, Ventilen und dgl. Insbesondere sind derartige Stellantriebe somit für sehr präzise Antriebe geeignet. Ein derartiger Stellantrieb ist beispielsweise in DE 102 01 140 beschreiben.

Bekannte Stellantriebe, die für den Einsatz in Kraftfahrzeugen für Drosselklappen und dgl. geeignet sind, weisen den Nachteil auf, dass ein recht großer Bauraum erforderlich ist. Da die unterschiedlichen Automobilhersteller unterschiedliche Elektro-Steckkontakte verwenden, es sich bei den Stellantrieben jedoch um Zukaufteile handelt, ist es häufig erforderlich, Zwischenstecker vorzusehen oder Sonderanfertigungen einzusetzen. Dies erhöht die Kosten.

Aus DE 101 22 053 A1, die alle Merkmale des Oberbegriffs des Anspruchs 1 offenbart, ist ein Stellantrieb mit einem mehrteiligen Getriebegehäuse bekannt, wobei in einem Teil des Gehäuses elektrische Leitungen angeordnet sind.

Aus DE 197 02 685 A1 ist ein Stellantrieb mit einem Getriebegehäuse bekannt, wobei der Deckel des Getriebegehäuses einen Stecker mit elektrischen Motor Anschlossen aufweist.

Aus US 200310102767 A1 ist ein Stellantrieb bekannt, der eine Bürstenhalteplate mit einem Motorstecker mit elektrischen Motor-Anschlossen aufweist.

Aufgabe der Erfindung ist es, ein Getriebegehäuse für ein mit einem Elektromotor verbindbares Getriebe zu schaffen, bei dem der Bauraum verringert ist und das auf einfache Weise an unterschiedliche Steckkontaktsysteme angepasst werden kann.

Die Lösung der Aufgabe erfolgt erfindungsgemäß durch die Merkmale des Anspruchs 1.

Das erfindungsgemäße Getriebegehäuse weist einen beispielsweise topfförmigen Gehäusekörper auf, der mit einem Gehäusedeckel verschlossen ist. Der Gehäusedeckel weist eine Lageraufnahme für ein Abtriebswellenlager auf, so dass in den Gehäusedeckel die Abtriebswelle, die mit dem in das Gehäuse eingebauten Getriebe verbunden werden kann, angeordnet ist. Zur Bauraumoptimierung sowie zur Vereinfachung der Montage sind erfindungsgemäß an dem Gehäusekörper Elektro-Anschlüsse vorgesehen, mit denen der Elektromotor verbunden werden kann. Hierbei handelt es sich vorzugsweise um elastisch ausgebildete Kontaktelemente, in die beispielsweise am Elektromotor vorgesehene Kontaktstifte bei der Montage des Elektromotors eingesteckt werden. Dies hat den Vorteil, dass bei der Montage des Elektromotors der elektrische Kontakt hergestellt wird. Erfindungsgemäß sind die mit Elektro-Anschlüssen verbundenen elektrischen Zuleitungen innerhalb der Wände des Gehäusekörpers angeordnet. Bei einem vorzugsweise aus Kunststoff hergestellten Gehäusekörper sind die Zuleitungen von den Wänden des Gehäusekörpers umspritzt bzw. in die Wände des Gehäusekörpers eingespritzt. Dies hat den Vorteil, dass die Lage der Zuleitungen eindeutig definiert sind und die Zuleitungen weder im Betrieb noch in der Montage beschädigt werden können, da sie von Kunststoff umgeben sind.

Zwischen dem Gehäusekörper und dem Gehäusedeckel ist ein elektrisches Verbindungselement angeordnet. Hierdurch ist eine elektrische Verbindung zwischen den mit den Elektro-Anschlüssen für den Elektromotor vorgesehenen Zuleitungen zu in dem Gehäusedeckel angeordneten Leitungen möglich. Die in dem Gehäusedeckel angeordneten Leitungen, die vorzugsweise eingespritzt sind, sind mit einem Kontaktstecker verbunden. Über den Kontaktstecker erfolgt die Stromzufuhr zu dem Elektromotor. Ferner können über den Kontaktstecker Signale übertragen werden. Das Vorsehen des Kontaktsteckers im Gehäusedeckel hat den Vorteil, dass beispielsweise für unterschiedliche Automobilhersteller unterschiedliche Deckel vorgesehen werden können. Der Stellantrieb kann somit durch das Vorsehen eines entsprechenden Deckels kundenspezifisch hergestellt werden. Durch diese modulare Bauweise können die Kosten erheblich reduziert werden.

Bei einer besonders bevorzugten Ausführungsform ist in dem Gehäusedeckel ferner ein Aufnahmehohlraum vorgesehen, in dem ein Sensor, beispielsweise ein Drehwinkelsensor, angeordnet werden kann. Die elektrischen Leitungen, die mit dem Sensor verbunden sind, sind vorzugsweise ebenfalls in dem Gehäusedeckel eingespritzt. Insbesondere können die Leitungen zu dem Kontaktstecker geführt werden, so dass die entsprechenden Sensorsignale ebenfalls über den Kontaktstecker geleitet werden.

Vorzugsweise weist der Gehäusekörper einen vorzugsweise im Wesentlichen zylindrischen Gehäuseansatz zur Aufnahme des Elektromotors auf. Hierbei ist der Gehäuseansatz und der Gehäusekörper vorzugsweise einstückig ausgebildet.

Insbesondere betrifft die Erfindung einen als Universalstellantrieb ausgebildeten Elektromotor, der in dem erfindungsgemäßen Getriebegehäuse angeordnet ist, wobei zusätzlich innerhalb des Getriebegehäuses vorzugsweise eine Sensorik angeordnet ist. Ein weiterer wesentlicher Aspekt der Erfindung besteht in dem modularen Aufbau des Systems. Insbesondere ist die Sensorik in dem Gehäusedeckel angeordnet, so dass je nach Art der gewünschten Sensorik auf einfache Weise der Gehäusedeckel ausgetauscht werden kann. Innerhalb des Gehäusedeckels ist vorzugsweise ferner der Kontaktstecker zur Verbindung mit einer elektrischen Zuleitung oder einem Kabelbaum angeordnet. Diese Kontaktstecker sind herstellerspezifisch ausgebildet. Je nach Art des geforderten Kontaktsteckers kann somit der entsprechende Gehäusedeckel verwendet werden.

Nachfolgend wird die Erfindung an Hand einer bevorzugten Ausführungsform unter Bezugnahme auf die anliegenden Zeichnungen näher erläutert.

Es zeigen:

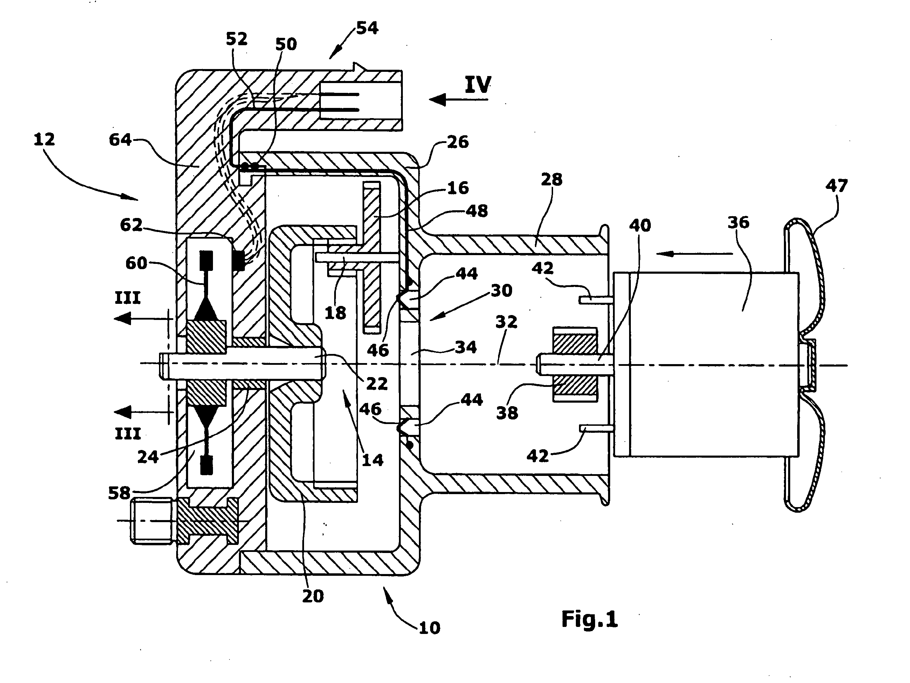

- Figur 1: einen schematischen Längsschnitt eines Getriebegehäuses, in dem ein Getriebe und ein Drehwinkelsensor eingebaut ist,
- Figur 2: einen dem in Figur 1 dargestellten schematischen Längsschnitt entsprechenden Längsschnitt, wobei zusätzlich der Elektromotor eingebaut ist,
- Figur 3: einen schematischen Längsschnitt in Richtung der Linie III-III in Figur 1 und
- Figur 4, 5 und 6: eine schematische Draufsicht auf unterschiedliche Steckkontakte in Richtung des Pfeils VI in Figur 1.

Der erfindungsgemäße Stellantrieb weist einen Gehäusekörper 10 auf, der mit einem Gehäusedeckel 12 verschlossen ist. Innerhalb des Gehäusekörpers 10 ist ein im dargestellten Ausführungsbeispiel als Planetengetriebe ausgebildetes Getriebe 14 angeordnet. In den Figuren ist ein Stufenplanet 16 dargestellt, der auf einer Welle 18, die an der Innenseite des Gehäusekörpers 10 befestigt ist, gelagert ist. Mit dem Stufenplanet 16 ist ein Hohlrad 20 verbunden. Das Hohlrad 20 ist mit einer Antriebswelle 22 drehfest verbunden, wobei die Antriebswelle 22 über ein Antriebswellen-Lager 24 in dem Gehäusedeckel 12 gelagert ist.

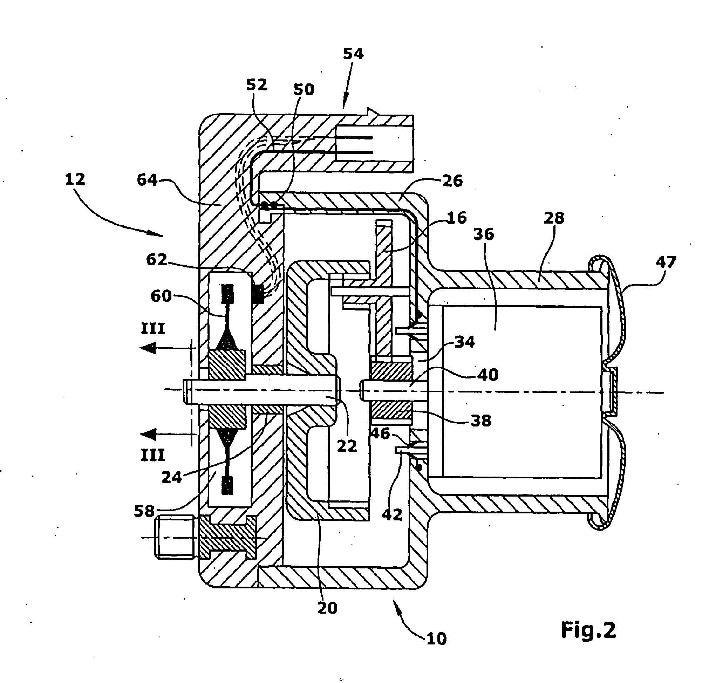

Mit dem das Getriebe 14 umgebenen topfförmigen Teil 26 des Gehäusekörpers 10 ist ein im Wesentlichen zylindrisch ausgebildeter Gehäuseansatz 28 konzentrisch verbunden. Hierbei ist der gesamte Gehäusekörper 10 erfindungsgemäß als ein Kunststoff-Spritzgussteil ausgebildet. In einer Zwischenwand 30 zwischen dem zylindrischen Gehäuseansatz 28 und dem topfförmigen Gehäuseteil 26 ist eine zu einer Mittelachse 32 des Gehäusekörpers 10 konzentrische Öffnung 34 vorgesehen. Durch die Öffnung 34 ist in montiertem Zustand eines Elektromotors 36 die mit einem Antriebszahnrad 38 verbundene Antriebswelle 40 des Elektromotors 36 eingeführt, so dass das Zahnrad 38 in den Stufenplaneten 16 eingreift (Figur 2). Hierbei kann in der Öffnung 34 ein Lager für die Antriebswelle 40 vorgesehen sein. Bei der Montage des Elektromotors 36 werden automatisch zwei einander gegenüberliegende Kontaktstifte 42 in Öffnungen 44 der Zwischenwand 30 eingeführt. In den Öffnungen 44 sind als elastische Kontaktelemente 46 ausgebildete Elektro-Anschlüsse vorgesehen. Dies hat den Vorteil, dass der elektrische Kontakt für den Elektromotor 46 unmittelbar bei der Montage automatisch hergestellt wird. In montiertem Zustand ist der Gehäuseansatz 28 mit dem Deckel 47 verschlossen, der zusätzlich den Motor 36 hält.

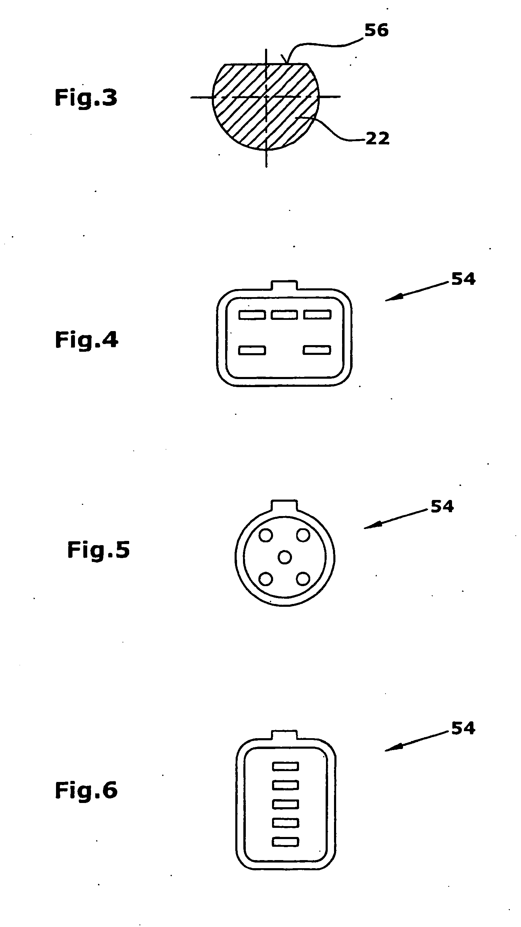

Die Elektro-Anschlüsse 46, bzw. die Kontaktelemente 46, sind mit elektrischen Zuleitungen 48 verbunden, die innerhalb der Wände des Gehäusekörpers 10 angeordnet bzw. in diesen eingespritzt sind. Im dargestellten Ausführungsbeispiel führen die Zuleitungen 48 zu einem ersten Kontaktteil eines elektrischen Verbindungselementes 50 an dem Gehäusekörper 10, dessen anderes Kontaktteil an dem Gehäusedeckel 12 vorgesehen ist. Innerhalb des Gehäusedeckels 12 sind ausgehend von dem Verbindungselement 50 elektrische Leitungen 52 vorgesehen bzw. eingespritzt, die zu einem Kontaktstecker 54 führen. Bei dem Kontaktstecker 54 kann es sich um unterschiedliche Arten von Kontaktsteckern handeln, wie beispielsweise in den Figuren 4, 5 und 6 dargestellt ist, und insbesondere, je nach Hersteller, variieren.

Die mit dem Hohlrad 20 verbundene Abtriebswelle 22 weist an ihrer Abtriebsseite eine Abflachung 56 (Figur 3) auf, so dass die Abtriebswelle 22 beispielsweise mit einem Hebel für eine Drosselklappe drehfest verbunden werden kann. Ferner kann die Abtriebswelle 22 auch mit einem Exzenter, beispielsweise für die Betätigung eines Ventils, drehfest verbunden werden.

Des weiteren ist in dem Gehäusedeckel ein Aufnahmehohlraum 58 vorgesehen. In dem Aufnahmehohlraum 58 ist ein scheibenförmiges Element 60 eines Drehwinkelsensors 60, 62 angeordnet, der ebenfalls drehfest mit der Abtriebswelle 22 verbunden ist. In dem Gehäusedeckel 12 ist ferner ein Aufnahmeelement 62 des Drehwinkelsensors vorgesehen bzw. eingegossen. In dem Aufnahmeelement 62 verlaufen eine oder mehrere elektrische Leitungen 64, die ebenfalls in dem Deckel 12 eingegossen sind zu dem Kontaktstecker 54.

## Patentansprüche

1. Getriebegehäuse für ein mit einem Elektromotor (36) verbindbares Getriebe, mit
einem Gehäusedeckel (12) mit einer Lageraufnahme für ein Abtriebswellen-Lager (24),
einem Gehäusekörper (10), der mit dem Gehäusedeckel (12) verschlossen ist, und
an dem Gehäusekörper (10) vorgesehenen Elektro-Anschlüssen (46) zum elektrischen Anschluss des Elektromotors (36), wobei
die mit den Elektroanschlüssen (46) verbundenen elektrischen Zuleitungen (48) innerhalb von Wänden de Gehäusekörpers (10) angeordnet sind, und **dadurch gekennzeichnet, daß** ein
zwischen dem Gehäusekörper (10) und dem Gehäusedeckel (12) angeordnetes elektrisches Verbindungselement (50) vorgesehen ist, das mit den Zuleitungen (48) verbunden ist.

2. Getriebegehäuse nach Anspruch 1, **dadurch gekennzeichnet, dass** die Zuleitungen (48) von den Wänden des Gehäusekörpers (10) umspritzt sind.

3. Getriebegehäuse nach Anspruch 1 oder 2, **dadurch gekennzeichnet, dass** die Elektroanschlüsse (46) elastisch ausgebildete Kontaktelemente aufweisen.

4. Getriebegehäuse nach Anspruch 3, **gekennzeichnet durch** einen in dem Gehäusedeckel (12) angeordneten Kontaktstecker (54), der über elektrische Leitungen (52) mit dem Verbindungselement (50) verbunden ist.

5. Getriebegehäuse nach einem der Ansprüche 1 - 4, **gekennzeichnet durch** einen im Gehäusedeckel (12) vorgesehenen Aufnahmehohlraum (58) zur Aufnahme eines Drehwinkelsensors (60, 62).

6. Getriebegehäuse nach Anspruch 5, **gekennzeichnet durch** elektrische Leitungen (64), die in dem Gehäusedeckel (12) zur Verbindung des Kontaktsteckers (54) mit dem Drehwinkelsensor (60, 62) vorgesehen sind.

7. Getriebegehäuse nach einem der Ansprüche 1 - 6, **gekennzeichnet durch** einen Gehäuseansatz (28) zur Aufnahme des Elektromotors (36).

## Claims

1. Gear case for a gear adapted to be connected with an electric motor (36), comprising:
a case cover (12) comprising a bearing seating for an output shaft bearing (24),
a case body (10) closed by the case cover (12), and
electric terminals (46) provided on the case body (10) for the electric connection of the electric motor (36), wherein
the electric input lines (48) connected with the electric terminals (46) are arranged within walls of the case body (10), and
**characterized in that** an electric connection element (50) arranged between the case body (10) and the case cover (12) is provided that is connected with the input lines (48).

2. Gear case according to claim 1, **characterized in that** the input lines (48) are injection molded into the walls of the case body (10).

3. Gear case according to claim 1 or 2, **characterized in that** the electric terminals (46) comprise elastic contact elements.

4. Gear case according to claim 3, **characterized by** a contact plug (54) arranged in the case cover (12), which is connected with the connection element (50) via electric lines (52).

5. Gear case according to one of claims 1-4, **characterized by** a receiving cavity (58) provided in the case cover (12) for accommodating a rotational angle sensor (60, 62).

6. Gear case according to claim 5, **characterized by** electric lines (64) provided in the case cover (12) for connecting the contact plug (54) with the rotational angle sensor (60, 62).

7. Gear case according to one of claims 1-6, **characterized by** an extension (28) of the case for receiving the electric motor (36).

## Revendications

1. Carter de transmission pour une transmission connectable à un moteur électrique (36), comprenant
un couvercle de carter (12) avec un logement de palier pour un palier (24) d'un arbre de sortie,
un corps de carter (10) fermé par ledit couvercle de carter (12), et
des connecteurs électriques (46) prévue sur ledit corps de carter (10) pour la connexion électrique dudit moteur électrique (36),
les lignes d'amenée électriques (48) raccordées aux connecteurs électriques (46) étant disposées au sein de parois dudit corps de carter (10), et
**caractérisé en ce qu'**un élément de connexion électrique (50) est prévu, qui est disposé entre ledit corps de carter (10) et ledit couvercle de carter (12), ledit élément étant raccordé audites lignes d'amenée (48).

2. Carter de transmission selon la revendication 1, **caractérisé en ce que** les lignes d'amenée (48) sont surmoulées par les parois dudit corps de carter (10).

3. Carter de transmission selon la revendication 1 ou 2, **caractérisé en ce que** les connecteurs électriques(46) comprennent des éléments de contact élastiques.

4. Carter de transmission selon la revendication 4, **caractérisé par** une fiche de contact (54) disposée dans ledit couvercle de carter (12), la fiche étant raccordée à l'élément de connexion (50) par des lignes électriques (52).

5. Carter de transmission selon l'une des revendications 1-4, **caractérisé par** un creux de logement (58), prévu dans le couvercle de carter (12), pour loger un détecteur d'angle de rotation (60, 62).

6. Carter de transmission selon la revendication 5, **caractérisé par** des lignes électriques (64) prévues dans ledit couvercle de carter (12) pour raccorder ladite fiche de contact (54) audit détecteur d'angle de rotation (60, 62).

7. Carter de transmission selon l'une des revendications 1-6, **caractérisé par** un montage en saillie (28) du carter pour y accommoder ledit moteur électrique (36).
